# DEMANDE DE BREVET EUROPEEN

(11) **EP 4 776 163 A1**
(43) Date de publication de la demande: **15.07.2026**
(21) Numéro de dépôt: 26150766.9
(22) Date de dépôt: 08.01.2026
(51) Int. Cl.: G06F 21/30, G06F 21/62

(54) **PROCÉDÉ D'IDENTIFICATION DE CARACTÉRISTIQUES D ÉQUIPEMENTS INDIVIDUELS DE SÉCURITÉ**

(30) Priorité: 12.01.2025 FR 2500290
(71) Demandeur: Altempo, 68126 Bennwihr (FR)
(72) Inventeur: RENAUD, Stéphane, 68126 BENNWIHR (FR)
(74) Mandataire: Cabinet Boettcher

(57) **Abrégé**

Procédé (0) d'identification de caractéristiques (11a, 11b, 11c, 11d) comprenant :
- l'acquisition (A) d'une image source (F1) d'une personne (2),
- la génération (B) par un serveur local (S0) d'une image anonymisée (F2) à partir de l'image source (F1) ;
- la création (C) d'une requête (100) comprenant l'image anonymisée (F2) et un jeu de questions (Q) relatives à des équipements individuels de sécurité (11a, 11b, 11C, 11d) ;
- la transmission (D) de la requête (100) vers un serveur distant (S2) ;
- la réception (E) par le serveur local (S0) d'un message (M) délivré par un serveur distant (S2) en réponse à ladite requête (100);
- la vérification (F) par le serveur local (S0) que des conditions d'accès définies dans un jeu de conditions d'accès prédéterminé sont vérifiées par les réponses (R) ;
- la génération (H) d'un signal d'autorisation (Cd) si les conditions d'accès sont vérifiées.

## Description

La présente invention se rapporte au domaine des équipements individuels de sécurité aussi connus sous le terme « équipement de protection individuelle » et de la sécurisation des personnes avec de tels équipements.

### ARRIERE PLAN DE L'INVENTION

Certaines opérations réalisées sur des sites sécurisés sont réalisées par des personnes accédant physiquement à un espace physique du site sécurisé.

Afin que chaque personne puisse réaliser les opérations requises en toute sécurité, cette dernière doit porter des équipements individuels de sécurité.

Certains accidents du travail pourraient être évités en s'assurant que la personne porte bien les équipements individuels de sécurité adaptés aux opérations / taches effectuées.

Généralement des responsables sécurité sont chargés de vérifier sur site que les personnes réalisant des opérations à risque ou en milieu à risque sont bien toutes équipées des équipements de sécurités obligatoires.

Cette surveillance peut se faire en utilisant des moyens de surveillance vidéo, mais cela reste une surveillance très aléatoire et couteuse à mettre en œuvre.

Il serait nécessaire de fournir une solution améliorant la sécurité des personnes.

### OBJET DE L'INVENTION

Un objet de l'invention est de fournir un procédé d'identification de caractéristiques (11a, 11b, 11c, 11d) visibles dans une image source et associées à des équipements individuels de sécurité

### RESUME DE L'INVENTION

A cet effet, selon un premier aspect l'invention concerne un procédé d'identification de caractéristiques visibles dans une image source et associées à des équipements individuels de sécurité, le procédé comprenant une étape d'acquisition d'une image source d'une personne, l'image source étant acquise à l'aide d'un capteur d'image.

Le procédé d'identification étant caractérisé en ce qu'il comporte :
- une étape de génération par un serveur local d'une image anonymisée à partir de l'image source par suppression de données à caractère personnel visibles dans l'image source, l'image anonymisée contenant potentiellement lesdites caractéristiques visibles à identifier ;
- une étape de création d'une requête comprenant l'image anonymisée et un jeu de questions relatives à des équipements individuels de sécurité potentiellement visibles dans l'image anonymisée ;
   - une étape de transmission de la requête vers un serveur distant qui est éloigné du serveur local ;
   - une étape de réception par un serveur local d'un message délivré par un serveur distant en réponse à ladite requête, le message contenant des réponses au jeu de questions ;
- une étape de vérification par le serveur local que des conditions d'accès définies dans un jeu de conditions d'accès prédéterminé sont vérifiées par les réponses contenues dans le message ; suivie
- d'une étape de génération d'un signal d'autorisation si l'étape de vérification confirme que les conditions d'accès définies dans le jeu de conditions d'accès sont bien vérifiées.

Par définition, le serveur distant est implanté sur un site distant vis-à-vis du site d'implantation du serveur local.

Le terme signal d'autorisation désigne un signal permettant a minima d'informer du résultat de l'étape de vérification. En ce sens le terme « signal d'autorisation » est synonyme et pourrait être remplacé par le terme « signal de surveillance ».

Un premier avantage du procédé selon l'invention est qu'il permet de générer un signal d'autorisation attirant l'attention sur le fait qu'un ou des équipements personnels de sécurité ne semblent pas apparents dans l'image source représentant la personne sensée porter ce ou ces équipements.

Selon le cas, ce signal d'autorisation permet d'informer du fait que tous les équipements de sécurité sont bien visibles sur l'image de la personne, ou au contraire qu'un équipement de sécurité est manquant ou incorrectement porté par la personne visible dans l'image.

En outre, ce signal d'autorisation peut en plus de son caractère informatif être utilisé pour commander un actionneur autorisant ou non l'accès physique de la personne visible sur l'image vers un espace physique de la zone sécurisée.

L'invention permet une amélioration de la sécurité des personnes.

Un deuxième avantage du procédé selon l'invention est de générer l'image anonymisée à un niveau local (suppression locale de données à caractère personnel visibles sur l'image source, ces données étant invisibilisées dans l'image anonymisée).

L'image transmise et parvenant au serveur distant, c'est-à-dire l'image anonymisée, est donc dépourvue de certaines au moins, préférentiellement de toutes, les informations à caractère personnel visibles dans l'image source.

Ainsi, l'image anonymisée est rendue compatible avec le Règlement général sur la protection des données (Règlement (UE) 2016/679 du Parlement européen et du Conseil du 27 avril 2016, relatif à la protection des personnes physiques à l'égard du traitement des données à caractère personnel et à la libre circulation de ces données, ci-après désigné par le terme RGPD).

Par conséquent, le risque de transmission de données à caractère personnel vers un serveur distant (par exemple un serveur appartenant à un tiers comme Chat-GPT ou GPT-4 ou COPILOT) est limité.

Le risque d'interception et/ou d'utilisation frauduleuse des données personnelles invisibilisées est donc réduit grâce à l'invention tout en améliorant la sécurité de la personne.

Dans certains modes de réalisation préférés afin d'être conforme aux législations en matière de gestion des données personnelles une fois l'image anonymisée générée, l'image source peut être effacée et à cette fin elle peut être uniquement stockée dans une mémoire tampon du système avant d'être effacée.

Un troisième avantage du procédé selon l'invention est qu'il permet de limiter le volume de calculs et le volume d'énergie utilisé au niveau du serveur local.

En effet, les opérations de calcul les plus complexes ne sont pas réalisées par le serveur local mais elles le sont par le serveur distant.

Les opérations les plus complexes réalisés par le serveur distant sont :
- l'analyse des caractéristiques visibles l'image permettant de répondre aux questions relatives aux équipements individuels de sécurité ; et
- la génération d'une réponse aux questions contenues dans la requête.

Comme on le verra par la suite avec une faible consommation en moyens de calculs et en énergie au niveau du serveur local, il est possible que le système de contrôle d'accès soit alimenté par une source d'énergie purement locale et hors réseau de distribution d'électricité, par exemple une source d'énergie combinant un accumulateur d'énergie électrique et un panneau photovoltaïque solaire alimentant ledit accumulateur.

On simplifie grandement l'installation du système de contrôle d'accès qui peut dès lors être autonome en énergie, c'est-à-dire déconnecté vis-à-vis d'un réseau externe de distribution électrique.

Enfin, un quatrième avantage de l'invention est qu'il n'est pas nécessaire de développer un serveur local propriétaire adapté à analyser l'image pour répondre aux questions relatives aux équipement personnels de sécurité.

En effet, il existe des serveurs distants à usage public qui sont déjà entraînée pour analyser des images et y détecter des objets dans ces images.

L'inconvénient de tels serveurs distants est que les requêtes qu'ils reçoivent peuvent être réutilisées pour entraîner des modules d'intelligence artificiel, ce qui compromet la confidentialité des données contenues dans ces requêtes.

En transmettant une image anonymisée, on peut obtenir une réponse à la requête pour un faible coût et sans compromettre la confidentialité des informations à caractère personnel qui sont invisibilisées dans l'image source.

L'invention permet de ne pas avoir à développer un module d'intelligence artificiel dédié spécifiquement entraîné pour la présente application ce qui évite des coûts de développement et d'apprentissage avec l'usage de jeux de données dédiés (DATASETs dédiés).

Le procédé et le système selon l'invention permettent des économies de temps, de moyens (infrastructures simplifiées avec un besoin moindre en puissance de calcul) et de finance (pas de besoin d'apprentissage spécifique à l'application).

Le fait de faire appel à un serveur distant plutôt qu'à un serveur local pour analyser l'image permet aussi d'avoir un serveur mieux entraîné puisque contrairement à un serveur local qui reçoit uniquement des requêtes locales dont le nombre est restreint, le serveur distant peut être utilisé pour recevoir des requêtes provenant d'un grand nombre d'utilisateurs ce qui améliore la qualité de l'entrainement du module d'intelligence artificiel préalablement entrainé utilisé par le serveur distant.

En résumé, l'invention :
- améliore la sécurité de la personne (vérification de la présence d'équipements personnels de sécurité) ;
- protège des données personnelles visibles dans l'image source (le visage, les yeux, les iris, le bas de visage, le bout des doigts, les empreintes, les formes de la personne, les tatouages, des objets présents dans l'image source comme des bijoux, chaînes, des caractères alphanumériques ou des logos peuvent être invisibilisés tant sur la personne 2 que dans l'arrière-plan ou avant-plan de la personne 2) ;
- est implémentable à moindre coût (il est moins couteux d'utiliser un serveur distant pouvant être utilisé / entrainé par plusieurs entités / utilisateurs plutôt qu'un serveur local dont l'usage est restreint et dont l'entraînement serait particulièrement couteux pour son seul utilisateur).

Dans un mode de réalisation préférentiel, le signal d'autorisation est un signal d'autorisation d'accès de ladite personne à un espace physique d'un site sécurisé, le signal d'autorisation d'accès étant transmis à un actionneur d'un mécanisme de contrôle d'accès.

Selon un second aspect, l'invention concerne un système de contrôle d'accès adapté à mettre en œuvre le procédé selon l'un quelconque des modes de réalisation de l'invention décrits dans la présente demande, le système de contrôle d'accès comportant :
- ledit serveur local ;
- ledit capteur d'image fonctionnellement relié audit serveur local pour générer l'image source de la personne ;
le serveur local étant adapté à générer l'image anonymisée à partir de l'image source, le serveur local étant relié à au moins une mémoire dans laquelle est mémorisée ledit jeu de questions relatives à des équipements individuels de sécurité potentiellement visibles dans l'image anonymisée et étant adapté à créer ladite requête comprenant l'image anonymisée et à transmettre ladite requête vers le serveur distant.

Le serveur local étant en outre adapté à recevoir un message délivré par le serveur distant en réponse à ladite requête, le message contenant lesdites réponses au jeu de questions, le serveur local étant en outre agencé pour mettre en œuvre l'étape de vérification et l'étape de génération du signal d'autorisation.

Le système de contrôle d'accès selon l'invention présente les avantages précités associés au procédé selon l'invention.

Ce système de contrôle d'accès permet de sécuriser à moindre coût les personnes souhaitant accéder à un site sécurisé sans pour autant compromettre des données personnelles de ces personnes.

En interdisant l'accès à une personne qui n'est pas équipée de l'ensemble des équipements de protection individuelles nécessaires pour accéder au site sécurisé, le système de contrôle d'accès selon l'invention contribue à protéger les personnes.

### BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:
[Fig. 1] la figure 1 est une vue des étapes principales du procédé 0 selon l'invention ;
[Fig. 2] la figure 2 est une vue schématique d'un premier mode de réalisation du système de contrôle d'accès 1 selon l'invention dans lequel le serveur local S0 est intégré dans une borne B associée à un actionneur 5 pour sélectivement autoriser l'accès à l'espace physique du site sécurisé ;
[Fig. 3] la figure 3 est une vue schématique d'un deuxième mode de réalisation du système de contrôle d'accès 1 selon l'invention, ce deuxième mode ayant pour particularité par rapport au premier mode de la figure 2, d'avoir un serveur local comportant une sous partie S0 intégrée dans la borne B du système d'accès et une sous partie S1 externe à la borne B.

### DESCRIPTION DETAILLEE DE L'INVENTION

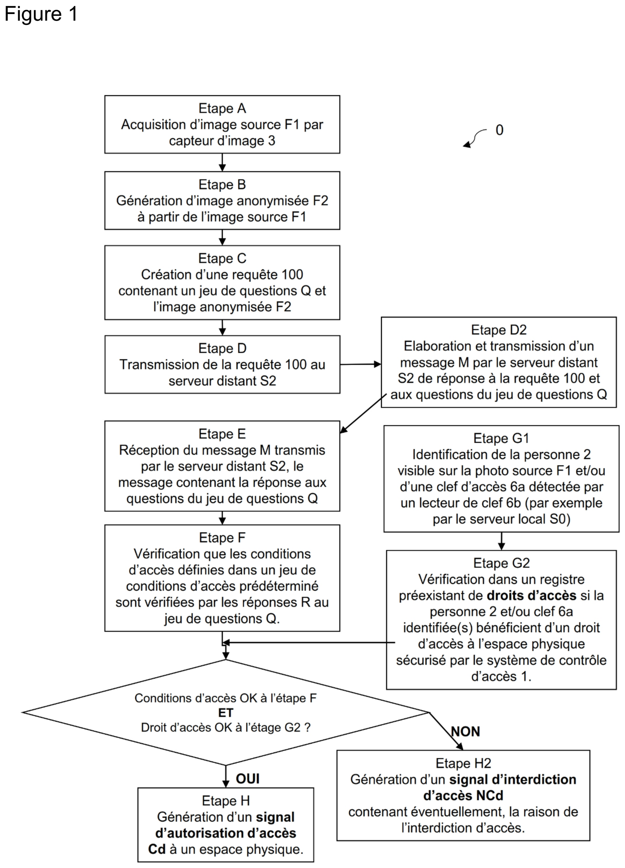

Le procédé selon l'invention illustré à la figure 1 est un procédé 0 d'identification de caractéristiques 11a, 11b, 11c, 11d visibles dans une image source F1, ces caractéristiques étant associées à des équipements individuels de sécurité (aussi connus sous le terme « équipement de protection individuelle ».

Le procédé comprend une étape d'acquisition A d'une image source F1 d'une personne 2, l'image source F1 étant acquise à l'aide d'un capteur d'image 3.

L'image source F1 peut être une photo ou une vidéo acquise avec un capteur d'image de type appareil photo ou caméra.

Le procédé d'identification comprend / comporte aussi une étape de génération B par un serveur local S0 d'une image anonymisée F2 à partir de l'image source F1 par suppression de données à caractère personnel 10a, 10b, 10c, 10e visibles dans l'image source F1, l'image anonymisée (F2) contenant potentiellement lesdites caractéristiques visibles à identifier.

Comme on le verra par la suite, la suppression de données à caractère personnel 10a, 10b, 10c, 10e est réalisée par différents outils permettant masquage et/ou floutage et/ou déformation de toute zone de l'image source F1 contenant/ montrant une donnée à caractère personnel 10a, 10b, 10c, 10e. Les données à caractère personnel sont par exemple des données biométriques de la ou des personnes 2 visibles dans l'image source et des données en arrière-plan ou avant-plan visibles dans l'image source F1.

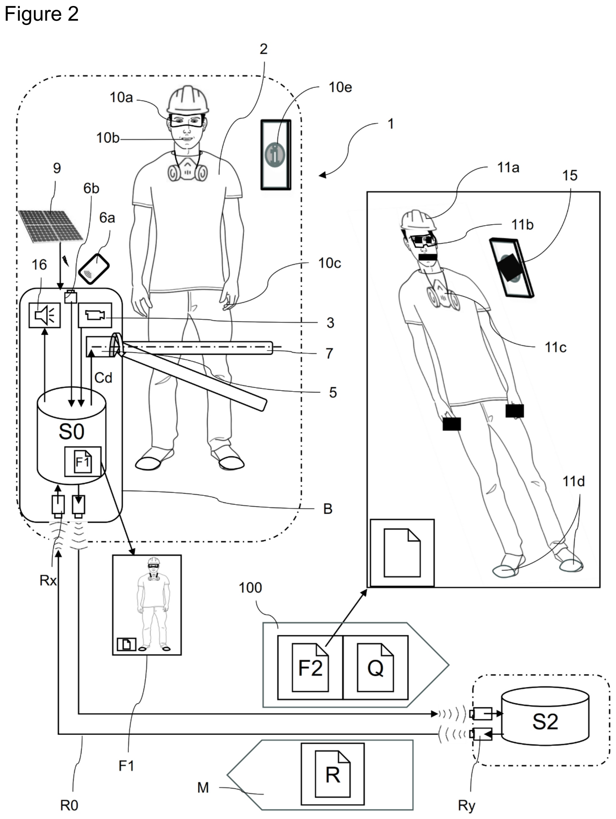

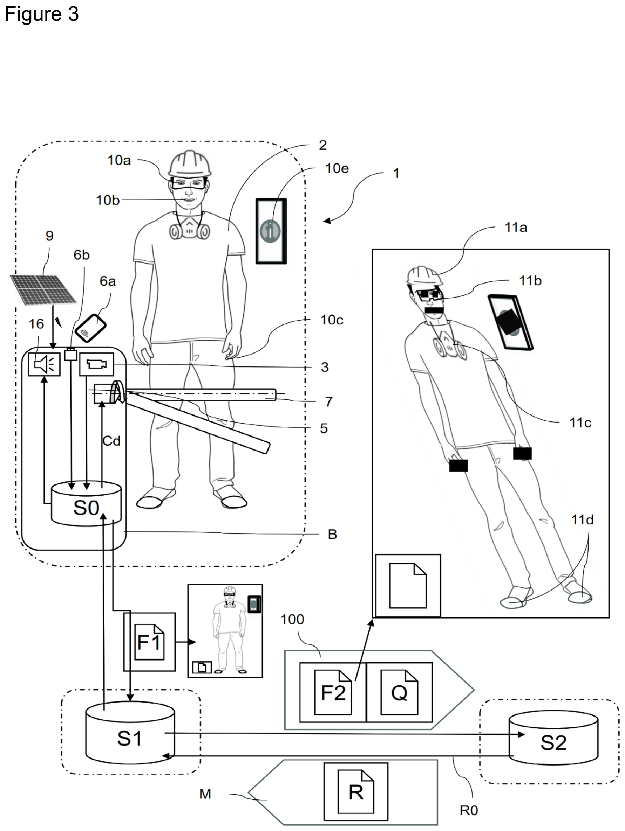

Par exemple le panneau 10e visible en arrière-plan sur les figures 2 et 3 porte un caractère et un logo qui sont des données à caractère personnel visibles dans l'image source F1 et qui sont invisibilisées par des masques 15 et déformations dans l'image anonymisée F2.

Le procédé selon l'invention comporte aussi une étape de création C d'une requête 100 comprenant l'image anonymisée F2 et un jeu de questions Q relatives à des équipements individuels de sécurité 11a, 11b, 11C, 11d potentiellement visibles dans l'image anonymisée F2 ;
- une étape de transmission D de la requête 100 vers un serveur distant S2 qui est éloigné du serveur local S0 (c'est-à-dire éloigné du site sur lequel est/sont implantées toute partie ou sous partie du serveur local S0) ;
- une étape de réception E par le serveur local S0 d'un message M délivré par un serveur distant S2 en réponse à ladite requête 100, le message M contenant des réponses R au jeu de questions Q.

Typiquement, le message M contient :
- une signature du serveur distant S2 prouvant que la réponse a bien été générée par le serveur distant S2 ; et
- une réponse R à chacune des questions Q / instructions de recherche Q contenues dans la requête 100 relatives aux équipements individuels de sécurité 11a, 11b, 11C, 11d.

Le procédé 0 selon l'invention comporte aussi :
- une étape de vérification F par le serveur local S0 que des conditions d'accès définies dans un jeu de conditions d'accès prédéterminé sont vérifiées par les réponses R contenues dans le message M ; suivie
- d'une étape de génération H d'un signal d'autorisation Cd si l'étape de vérification F confirme que les conditions d'accès définies dans le jeu de conditions d'accès sont bien vérifiées à l'étape de vérification F.

Les conditions d'accès définies dans le jeu de conditions d'accès sont considérées comme vérifiées, c'est-à-dire remplies, à partir de comparaison des seules réponse R contenues dans le message M par rapport aux conditions d'accès listées dans le jeu de conditions d'accès.

Pour la compréhension de l'invention, le terme serveur local S0, S1 désigne de manière non limitative tout équipement ou ensemble d'équipements informatique comportant mémoire(s) et processeur(s) reliés entre eux pour effectuer des étapes, opérations nécessaires pour la mise en œuvre du procédé selon l'invention.

Le terme serveur local peut désigner un équipement informatique S0 intégré dans une borne de contrôle d'accès B ou plusieurs parties d'équipements S0, S1 réparties localement et reliées entre elles via un réseau de communication appartenant au serveur local ce réseau de communication appartenant au serveur local étant dans un cadre de protection des données où les données transmises en interne dans le serveur local ne sont pas accessibles au public. A contrario, le serveur distant qui gère des requêtes anonymisées peut être accessible au public sans risque de compromettre la confidentialité des données à caractère personnel qui ont été invisibilisées.

En d'autres termes, dans certains modes de réalisation, des parties du serveur local S0 peuvent être dans une borne B d'un système de contrôle d'accès 1 alors que d'autres partie du serveur local S1 peuvent être au niveau local mais en dehors de ladite borne B.

Pour la compréhension de l'invention, le terme une requête 100 désigne par exemple une requête formulée via un seul message M transmis au serveur distant ou une requête formulée via une pluralité de messages distincts successivement envoyés au serveur distant S2.

Ainsi, de manière indifférente pour la mise en œuvre du procédé 0 selon l'invention, la requête 100 peut être formulée dans un seul message M transmis au serveur distant S2 ou être formulée dans une pluralité de message successifs M contenant respectivement la photo anonymisée et/ou une ou plusieurs des questions Q (par exemple on peut avoir un message avec la photo anonymisée F2 suivi d'un ou plusieurs messages M contenant uniquement les questions Q relatives aux équipements individuels de sécurité potentiellement visibles sur la photo anonymisée F2.

Préférentiellement, le procédé 0 comporte aussi :
- une étape d'identification G1 de la personne 2 visible sur l'image source F1 et/ou d'une clef d'accès 6a détectée par un lecteur de clef d'accès 6b ; et
- une étape de vérification de droit d'accès G2 consistant à vérifier dans un registre préexistant de droits d'accès si la personne 2 visible sur l'image source F1 et/ou la clef d'accès 6b identifiées à l'étape d'identification G1 bénéficient ou non d'un droit d'accès à l'espace physique du site sécurisé.

Le procédé comportant aussi une opération logique telle que le signal d'autorisation d'accès Cd émis à l'étape de génération H est émis seulement :
- si d'une part les conditions d'accès définies dans le jeu de conditions d'accès sont bien vérifiées (cette conditions d'accès est effectuée à l'étape de vérification F) ; et
- si d'autre part la personne 2 visible sur l'image source F1 et/ou la clef d'accès 6b bénéficient bien d'un droit d'accès (c'est-à-dire un droit d'accès actif) à l'espace physique selon le registre préexistant de droits d'accès (cette condition d'accès « vérification de droit d'accès » correspond à l'étape G2).

Ici, la clef d'accès 6a (illustrée aux figures 2 et 3) est de type badge d'accès 6a détectée par le lecteur de clef 6b qui est ici un lecteur de type RFID.

Cependant le lecteur 6b adapté à lire la clef 6a, pourrait être de tout autre type comme de type lecteur optique et/ou de type lecteur de bande magnétique.

Comme on le comprend des figures 2 et 3, l'actionneur 5 du mécanisme de contrôle d'accès 7 comporte une barrière physique mobile entre une position d'autorisation de passage de la personne vers l'espace physique du site sécurisé et une position d'interdiction d'accès vers ledit espace physique.

L'actionneur 5 du mécanisme de contrôle d'accès 7 étant agencé pour qu'à réception dudit signal d'autorisation d'accès Cd il autorise le déplacement de la barrière physique mobile de sa position d'interdiction de passage vers sa position d'autorisation de passage.

Ici le mécanisme de contrôle d'accès 7 comporte des barres d'un tourniquet formant des obstacles à la personne, mais il pourrait comprendre une ou plusieurs portes ou grilles dont l'ouverture est sélectivement autorisée par l'actionneur 5.

Le serveur distant S2 est agencé pour répondre aux questions Q contenues dans la requête 100 en mettant en œuvre au moins une inférence d'un modèle d'une intelligence artificielle préalablement entrainée.

Le modèle d'intelligence artificielle préalablement entraîné est préférentiellement du type réseau de neurones profonds, c'est-à-dire un réseau de neurones entrainé par apprentissage profond (en anglais : deep learning).

Préférentiellement, le modèle d'intelligence artificielle préalablement entraîné est également du type « grand modèle de langage » (en anglais Large Language Model « LLM »).

Par définition, une inférence est une opération (ici exécutée par le modèle d'intelligence artificielle mis en œuvre par le serveur distant S2 consiste à délivrer des sorties, c'est-à-dire des réponses R, en réponse à une entrée, c'est-à-dire les questions Q contenues dans la requête 100.

Préférentiellement, le modèle d'intelligence artificielle est agencé à traiter des questions Q exprimées en langage humain naturel (modèle conversationnel).

Par exemple le modèle de l'intelligence artificielle préalablement entrainée est un transformeur génératif préappris (ou préentraîné), par exemple GPT, de l'anglais « generative pre-trained transformer ».

Typiquement ce modèle de l'intelligence artificielle préalablement entraînée appartient à un réseau comme ChatGPT ou GPT-3 ^{®} ou GPT-4 ^{®} , GPT-4 Vision ^{®} ou éventuellement un ou plusieurs des modules de la liste suivante de modules d'intelligence artificielle, comprenant COPILOT ou CLIP (pour Contrastive Language-Image Pre-training) ou DINO (Self-Distillation with No Labels) ou Swin Transformer (Shifted Window Transformer) utilisant un modèle de Microsoft ^{®}, ou DETR (DEtection TRansformer) de la société Facebook AI, ou YOLO (You Only Look Once) ou EfficientDet utilisant un modèle de la société Google Inc., ou Mask R-CNN utilisant un modèle de la société Facebook AI, ou ViT (Vision Transformer) développé par la société Google Inc., ou DeepLab développé par la société Google Inc., ou OpenPose développé par Carnegie Mellon University, ou SlowFast un modèle de Facebook AI, ou I3D (Inflated 3D ConvNet) de Google Inc. avec réseaux de neurones convolutifs 3D1, ou TSN (Temporal Segment Networks, ou MMDetection module développé par une équipe de recherche de Hong Kong University of Science and Technology, ou Detectron2, ou DeepSORT, ou AlphaPose, ou HRNet (High-Resolution Network) un modèle Microsoft, ou DensePose, un modèle de Facebook AI.

Il est possible que le serveur distant S2, pour répondre à la requête Q combine ces modèles entre eux pour par exemple améliorer la taux de réponses justes.

Les requêtes 100 et/ou les questions Q transmises au serveur distant S2 peuvent être au format HTML.

De même le ou les message M de réponse aux questions Q émis par le serveur S2 peuvent être reçues au niveau du serveur local S0 au format HTML.

Grâce au questionnement du modèle d'intelligence artificielle au niveau du serveur distant S2, on minimise le besoin en ressources de calcul du système de contrôle d'accès au niveau local et par conséquent, on limite sa consommation électrique.

Ainsi, le procédé selon l'invention permet de réaliser une analyse complexe de la photo F2 tout en ayant une très faible consommation électrique au niveau du serveur local S0, c'est-à-dire au niveau du lieu d'implantation du site sécurisé.

Cela facilite grandement l'implémentation du système d'accès selon l'invention dont le besoin en électricité est minimisé.

Préférentiellement, dans l'étape de génération B de l'image anonymisée F2 à partir de ladite image source F1 fait appel à l'un au moins des outils compris dans le groupe d'outil comprenant :
- un outil de reconnaissance de visage et/ou d'yeux (par exemple un modèle HAAR_CASCADE (librairie OPENCV)) ;
   - un outil de reconnaissance des membres et/ou de doigts d'une personne (par exemple une librairie MEDIAPIPE) ;
   - un outil de déformation d'une image par élongation de zone de l'image (par exemple un outil d'élongation différentielle programmée) ;
   - un outil de floutage partiel ou global d'image (par exemple un floutage gaussien ou tout autre floutage comme un outil de floutage ou de masquage d'une librairie OPENCV) ;
   - un outil de masquage de zones d'image où sont identifiées une portion de visage, des yeux, une bouche ou des doigts de la personne (2) visible sur l'image source (F1) (par exemple un masquage due la librairie OPENCV).

Ledit outil d'élongation peut être programmé pour étirer ou éventuellement contracter des zones de l'image source à l'aide d'un ou plusieurs facteurs d'étirement ou contraction variable(s) selon les coordonnées dans l'image source de la zone à étirer / contracter suivant au moins une direction de déformation.

Ce ou ces facteurs d'étirement ou contraction variables peuvent être prédéterminés ou être générés de manière aléatoire par un module du serveur local S0 dans la limite de bornes prédéfinies, certains des facteurs d'étirement ou contraction pouvant agir suivant une direction d'abscisse dans l'image source F1 alors que d'autres facteurs d'étirement ou contraction peuvent agir suivant une direction d'ordonnées dans l'image source F1.

Sur les figures 2 et 3, l'image anonymisée F2 est une image déformée de l'image source F1 qui est obtenue avec l'outil de déformation et une image masquée à l'aide de l'outil de masquage.

Le jeu de questions (Q) relatives aux équipements individuels de sécurité 11a, 11b, 11C, 11d potentiellement visibles dans l'image anonymisée F2 est préférentiellement choisi dans une liste prédéfinie de questions.

La liste prédéfinie de questions comprend par exemple :
- « La personne visible sur l'image porte-t-elle un casque de sécurité sur la tête ? » ;
- « La personne visible sur l'image porte-t-elle un casque antibruit sur les oreilles ? » ;
- « La personne visible sur l'image porte-t-elle un gant sur chaque main ? »
- « La personne visible sur l'image porte-t-elle un pantalon ? » ;
- « La personne visible sur l'image porte-t-elle un heaume ou un écran facial sur la tête ? » ;
- « La personne visible sur l'image porte-t-elle des lunettes de protection devant les yeux ? » ;
- « La personne visible sur l'image porte-t-elle des chaussures de sécurité aux pieds ? » ;
- « La personne visible sur l'image porte-t-elle une veste à col fermé avec des manches longues et serrées aux poignets ? » ;
- « La personne visible sur l'image porte-t-elle une protection respiratoire sur le visage ? » ;
- « La personne visible sur l'image porte-t-elle un harnais ? » ;
- « La personne visible sur l'image porte-t-elle une visière anti arcs électriques ? » ;
- « La personne visible sur l'image porte-t-elle une cagoule de soudage ? » ;
- « La personne visible sur l'image porte-t-elle une ceinture de maintien autour de la taille ? » ;
- « La personne visible sur l'image porte-t-elle des manchettes anti-coupure sur ses avant-bras ? » ;
- « La personne visible sur l'image porte-t-elle un masque à gaz sur le visage ? » ;
- « La personne visible sur l'image porte-t-elle un appareil respiratoire intégré (ARI) ? » ;
- « La personne visible sur l'image porte-t-elle une cagoule à cartouche de gaz de respiration ? » ;
- « La personne visible sur l'image porte-t-elle un détecteur multi-gaz ? » ;
- « La personne visible sur l'image porte-t-elle un détecteur de radio-activité ? ».

Préférentiellement, la requête 100 contient en plus du jeu de questions Q relatives aux équipements individuels de sécurité 11a, 11b, 11C, 11d, une instruction du type « répondre à chaque question par oui ou par non » ou une instruction du type « répondre à chaque question par 1, si la réponse à la question est oui ou par 0, si la réponse à la question est non ».

Avec une telle instruction contenue dans la requête Q, de réponse par « oui » (ou « 1 ») ou par « non » (ou « 0 », on obtient une réponse simple sous forme d'un opérateur proche d'un opérateur mathématique ou d'un opérateur booléen qui sont facilement interprétable (la réponse pourrait aussi prendre une forme de tableau contenant des couples de paires de cellules, les cellules d'une même paire de cellules contenant une cellule contenant une question Q (ou un identifiant de la question donnée Q) et une cellule contenant la réponse à cette question donnée Q dans un format de réponse prédéterminé et partagé entre le serveur local et le serveur distant.

On simplifie ainsi grandement l'étape de vérification F réalisée par le serveur local S0 pour savoir si les conditions d'accès prédéterminées sont vérifiées ou non par les réponses contenues dans le message M.

En effet, cette étape de vérification peut être effectuée par un simple module électronique au niveau du serveur local S0 qui vérifie si toutes les questions ont bien reçu la réponse attendue, à savoir « oui », ce qui signifie que toutes les conditions d'accès relatives aux équipements personnels de sécurité sont bien vérifiées (c'est-à-dire que la personne est admissible à l'accès car ses équipements de sécurité requis pour l'accès à l'espace physique du site sécurisé sont bien tous visibles sur la photo anonymisée F2 et semblent correctement portés).

Si, a contrario, l'une au moins des réponses R est « non », cela signifie que l'une au moins des conditions d'accès relatives aux équipements personnels de sécurité n'est pas respectée et l'accès est alors refusé (le signal d'autorisation Cd n'est pas émis).

Cette analyse est très simple à effectuer par un simple module électronique préprogrammé contenant la liste des questions à envoyer au serveur distant S2.

Comme chacune de ces questions Q de la liste étant associée à une seule condition de sécurité devant être vérifiée pour autoriser l'accès au site et à une seule une réponse attendue correspondant à la question Q, à savoir « OUI » ou « NON » alors l'étape de vérification F est simple à automatiser.

Préférentiellement, on fait en sorte que chaque question Q posée associée à une condition d'équipement de sécurité donnée ait pour une réponse R attendue « oui » pour que la condition donnée soit considérée comme vérifiée.

Si l'une des réponses est « NON », alors cela signifie que la condition correspondante relative à l'équipement de sécurité mentionné dans la question R n'est pas vérifiée et une étape H2 de génération d'un signal d'interdiction d'accès NCd est alors mise en œuvre.

Le signal d'interdiction d'accès NCd est transmis à une interface homme machine du système de contrôle d'accès 1 selon l'invention.

L'interface homme machine qui peut comprendre un écran d'affichage et/ou un hautparleur 16 est agencée pour informer la personne 2 que l'accès est refusé, cette information pouvant également contenir la raison de l'interdiction d'accès, à savoir la copie de chaque condition d'accès prédéterminée qui est considérée comme non vérifiée.

En ce sens, si la réponse R à la question Q « La personne visible sur l'image porte-t-elle un casque de sécurité sur la tête ? » est « OUI » alors la condition d'accès relative au port obligatoire du casque est dite vérifiée et l'accès est autorisé vers l'espace physique du site sécurisé (le signal Cd est émis).

A contrario, si la réponse R à la question Q « La personne visible sur l'image porte-t-elle un casque de sécurité sur la tête ? » est « NON » alors la condition d'accès relative au port obligatoire du casque n'est pas vérifiée et l'accès vers l'espace physique est interdit, le signal d'interdiction d'accès NCd est émis (étape H2).

Le message d'information contenu dans le signal d'interdiction NCd peut-être « condition d'accès non vérifiée » suivi de la liste des conditions d'accès non vérifiée(s), c'est-à-dire dans l'exemple précédent au moins :« casque de sécurité sur la tête ».

L'information émise (affichée ou énoncée via le hautparleur) donnant : « condition d'accès non vérifiée : « casque de sécurité sur la tête ».

Par exemple sur l'image anonymisé des figures 2 et 3, on voit que la personne porte un casque mais que son masque respiratoire 11c n'est pas porté, ainsi, si la question Q posée est « La personne visible sur l'image porte-t-elle une protection respiratoire sur le visage ? », alors la réponse R donnée sera « non », le signal d'interdiction d'accès NCd sera émis et pas le signal d'accès Cd.

L'information diffusée par l'interface homme machine associée au signal NCd de refus d'accès sera « port de protection respiratoire sur le visage ».

La personne 2 pourra alors positionner correctement le masque et demander la transmission d'une nouvelle requête 100 (génération d'une nouvelle image source et d'une nouvelle image anonymisée sur laquelle le masque serait correctement porté, cette condition étant alors vérifiée).

Comme on le comprend des figures 2 et 3, le système de contrôle d'accès 1 selon l'invention est adapté à mettre en œuvre le procédé selon l'invention.

A cette fin, le système de contrôle d'accès 1 comporte :
- ledit serveur local S0 ;
- ledit capteur d'image 3 fonctionnellement relié audit serveur local S0 pour générer ladite image source F1 de la personne 2.

Le serveur local S0 est en outre adapté à générer l'image anonymisée F2 à partir de l'image source F1.

Le serveur local S0 est ici relié à une mémoire dans laquelle est mémorisé ledit jeu de questions Q relatives à des équipements individuels de sécurité 11a, 11b, 11C, 11d potentiellement visibles dans l'image anonymisée F2.

Le serveur local S0 est en outre adapté à créer ladite requête 100 comprenant l'image anonymisée F2 et à transmettre ladite requête vers le serveur distant S2.

De plus, le serveur local S0 est aussi adapté à recevoir le message M délivré par le serveur distant S2 en réponse à ladite requête 100.

Le message M contenant lesdites réponses R au jeu de questions Q.

Le serveur local S0 est aussi agencé pour mettre en œuvre l'étape de vérification F et l'étape de génération H du signal d'autorisation Cd ainsi que l'étape H2 de génération du signal d'interdiction d'accès NCd.

Par ailleurs, dans les modes de réalisation où le système de contrôle d'accès 1 réalise également une vérification de l'identité de la personne 2 et/ou d'une clef 6a portée par la personne, le système de contrôle d'accès 1 permet aussi une fonction de sécurisation d'accès en fonction de droits d'accès individuels au le site.

Le serveur local S0 est alors relié à une mémoire sur laquelle sont stockées :
- les identités ou codes d'identification personnelle des personnes ayant obtenu une autorisation d'accès au site via le serveur local délivrant le signal d'autorisation Cd ;
- une liste d'équipements individuels de sécurité détectés, cette liste étant générée par le serveur local S0 en fonction des réponses contenues dans des messages successivement reçus par le serveur local S0, le serveur local S0 étant ainsi adapté à tenir un décompte des équipements de sécurité détectés (c'est-à-dire une entrée nécessaire pour gérer un stock des équipements individuels de sécurité disponible ou indisponibles car déjà utilisés sur le site sécurisé).

Le système et le procédé selon l'invention sont également utilisables pour réaliser un audit de sécurité avec possible génération de statistiques, sur la question du respect des obligations de port des équipements individuels de sécurité par les personnes accédant à un site sécurisé.

Le système et le procédé selon l'invention permettent de contrôler l'accès, c'est-à-dire a minima de surveiller sans interdire l'accès physique d'une personne qui ne porterait pas les équipements de sécurité obligatoires ou qui les porterait de manière incorrecte.

La surveillance permise par le procédé et le système selon l'invention permet de réaliser un audit précis sur le port des équipements de protection individuel, éventuellement d'avertir la personne du fait qu'elle est correctement ou incorrectement équipée et éventuellement de physiquement contrôler l'accès des personnes dans la zone sécurisée.

En ce sens l'invention est utilisable à des fins de prévention de risque et d'analyse statistique.

Le système et le procédé selon l'invention permettent de compter des équipements utilisés et peuvent être en ce sens interfacés avec un module de gestion de stock de ces équipements.

Les données collectées par le serveur local S0 peuvent être utiles pour connaitre le temps d'utilisation des équipements individuels de sécurité ce qui peut être une donnée de gestion de la maintenance desdits équipements individuels de sécurité.

Il est à noter que le jeu de conditions d'accès prédéterminé peut être sélectionné dans une base de données appartenant au système d'accès 1 et comportant plusieurs jeux de conditions d'accès prédéterminés, chaque jeu dans la base de données étant associé à une personne particulière ou à une habilitation professionnelle particulière qui peut être elle-même associée à la personne ou à une opération déclarée devant être réalisée par la personne.

Typiquement, les mémoires du système ainsi que le serveur S0 sont reliés à une interface de programmation permettant à un opérateur du système de modifier des contenus de ces mémoires, d'allouer droits d'accès personnels, de modifier les listes de questions Q et de conditions d'accès nécessaires liées aux équipements de sécurité et les listes de réponse attendue pour chaque question Q donnée.

Ainsi, l'opérateur du système de gestion d'accès 1 peut indiquer pour chaque personne habilitée à pénétrer sur le site sécurisé, sa fonction et/ou son habilitation professionnelle particulière (agréé soudure ou agréé pour des interventions sur réseau haute tension...) et/ou l'opération déclarée justifiant le besoin d'accès au site, ce qui facilite la sélection des conditions d'accès associées dans les listes mémorisées.

Par exemple, si l'opération déclarée justifiant le besoin d'accès est intervention de soudure alors cela impliquera qu'une protection respiratoire et un masque de soudure ou lunette de soudure et gants de soudure et veste de soudure seront des équipements de sécurité nécessairement associée à l'opération de soudure déclarée.

Le système génèrera une liste de questions Q en fonction de l'opération à réaliser sur le site qui une liste connue d'équipements de protection individuelle.

En résumé, le serveur local S0 comporte un module local de traitement agencé pour :
- commander l'acquisition A de l'image source F1 de la personne 2 par ledit au moins un capteur d'image 3 ;
- mettre en œuvre l'étape de génération B de l'image anonymisée F2 à partir de l'image source F1 ;
- mettre en œuvre l'étape de création C de la requête 100 ;
- commander la transmission D de la requête 100 vers un serveur distant S2 ;
- recevoir (étape E) et mémoriser le message M délivré par un serveur distant S2 ;
- mettre en œuvre l'étape de vérification F (vérification que les conditions d'accès définies dans le jeu de conditions d'accès prédéterminées sont bien vérifiées par les réponses R contenues dans le message M.

En outre, le serveur local ou un autre élément de calcul du système 1 communiquant avec le serveur local S0 est adapté à :
- mettre en œuvre l'étape d'identification G1 de la personne 2 visible sur l'image source F1 et/ou d'identification de la clef d'accès 6a détectée par un lecteur de clef d'accès 6b ;
- mettre en œuvre l'étape de vérification de droit d'accès G2 consistant à vérifier dans un registre préexistant de droits d'accès si la personne 2 et/ou la clef d'accès 6b qui ont été identifiées à l'étape d'identification G1 bénéficient ou non d'un droit d'accès à l'espace physique du site sécurisé ;
- émettre le signal d'autorisation d'accès Cd vers l'actionneur du mécanisme de contrôle 5 (mise en œuvre de l'étape H) si d'une part les conditions d'accès définies dans le jeu de conditions d'accès sont bien vérifiées et si d'autre part la personne 2 visible sur l'image source F1 et/ou la clef d'accès 6b bénéficient d'un droit d'accès (c'est-à-dire un droit d'accès actif) à l'espace physique selon le registre préexistant de droits d'accès ;
- émettre le signal NCd en cas de refus d'accès (étape H2).

Le ou lesdits modules de traitement du serveur local S0 et/ou du serveur distant S2 comportent par exemple un processeur, un microcontrôleur, ou bien un circuit logique programmable tel qu'un FPGA (pour Field Programmable Gate Arrays) ou un ASIC (pour Application Specific Integrated Circuit).

Sur l'exemple de la figure 2, l'image anonymisée F2 est générée par le serveur local S0 qui est implanté dans la borne de contrôle d'accès B contenant le capteur d'image 3 et l'actionneur 5 de l'actionneur 5 d'un mécanisme de contrôle d'accès 7.

Ce mode de réalisation de la figure 2 permet de centraliser un maximum des fonctions du procédé de la figure 1 au niveau de la borne de contrôle d'accès B, ce qui simplifie l'installation l'implantation du système de contrôle d'accès 1.

Ce serveur local S0 particulièrement adapté à être alimenté par une source d'alimentation 9 comportant un panneau photovoltaïque et un accumulateur d'énergie électrique rechargé par ledit panneau photovoltaïque.

Sur l'exemple de la figure 3, le système de contrôle d'accès 1 comporte une partie de serveur local S0 implantée dans la borne de contrôle d'accès B et relié à une sous partie du serveur local S1 qui est implantée à distance de la borne B, sur un réseau sécurisé appartenant au système de contrôle d'accès 1.

Ce mode de réalisation de la figure 3 est utile pour déporter vis-à-vis de la borne B certaines fonctions consommatrices de ressources comme des calculs ou de l'énergie.

En effet la borne B et la sous partie S0 du serveur local intégrée à la borne B peuvent être alimentée par une source d'énergie locale 9 comportant le panneau photovoltaïque et l'accumulateur alors que la sous partie de serveur local S1 peut être située dans une zone distante de la borne B pour être électriquement alimentée par un réseau électrique externe au système 1 selon l'invention.

Ainsi, sur cette figure 3, les sous partie S0 et S1 du serveur local sont éloignées l'une de l'autre mais communiquent entre elles via un réseau de communication sécurisé appartenant au système de contrôle d'accès 1.

De manière générale, la communication entre le serveur local S0 et le serveur distant S2 ou entre les sous parties S0, S1 du serveur local, ou entre la sous partie S1 du serveur local qui est distante de la borne B et le serveur distant S2 peut se faire via un réseau de communication sécurisé R0 comportant des portions filaires et/ou sans fil (par exemple un réseau informatique sécurisé utilisant de l'ADSL et/ou de la fibre optique et/ou un réseau téléphonique de type GSM, 3G, 4G, 5G, 6G, réseau satellitaire, WIFI ou autre).

Dans le mode de réalisation de la figure 2, on voit que la communication entre le serveur local S0 et le serveur distant S2 se fait via des émetteurs/ récepteurs radioélectriques Rx, Ry et un réseau de communication R0 ayant une section de communication sans fil. Par exemple un réseau de communication sans fil R0 peut comporter une section de communication sans fil supportant les normes de communication de type 3G, 4G, 5G, 6G et éventuellement une section de réseau filaire.

Sur cette figure 2, la borne B est équipée d'émetteurs/récepteurs radioélectriques sans fil Rx fonctionnellement reliés au serveur local S0 pour communiquer avec ce dernier/

Le serveur distant S2 est fonctionnellement relié à des d'émetteurs/récepteurs radioélectriques sans fil Ry distants des émetteurs / récepteurs Rx implantés au niveau local, au niveau de la borne B.

La communication entre les émetteurs/récepteurs Rx et Ry se fait via le réseau de communication R0 qui peut être un réseau de type internet et/ou intranet via un protocole de communication sécurisé.

Dans le mode de réalisation de la figure 3, la partie de serveur local S0 présente dans la borne B réalise des fonctions simples comme la fonction de commande de l'acquisition de l'image source F1 via le capteur d'images 3.

Les fonctions plus complexes du procédé 0, comme la génération de l'image anonymisée F2 étant réalisées au niveau de la sous partie de serveur local S1 qui est déportée vis-à-vis de la borne B.

L'alimentation électrique de la partie S0 peut se faire via une source électrique locale autonome.

Cela simplifie que l'implantation de la borne B peut être hors réseau électrique alors que l'autre partie du serveur local S1 qui est plus consommatrice d'énergie électrique peut être alimentée par un réseau électrique externe disponible à distance de la borne B.

Un autre avantage du système 1 selon la figure 3 est que la sous partie du serveur local S1 qui est distante de la borne B peut être utilisée pour servir d'interface entre :
- une ou plusieurs sous parties de différents serveurs locaux respectivement implantées dans différentes bornes B similaires entre elles ; et
- le serveur distant S2.

Par ailleurs, le fait d'avoir une sous partie S1 de serveur local qui est distante de la borne B est utile pour simplifier la conception de chaque borne B et pour que plusieurs bornes B puissent communiquer avec une même sous partie S1 de serveur local dans un cadre complètement sécurisé.

Par exemple toute communication entre des sous parties d'un serveur local S0 et S1 du système de contrôle d'accès 1 peut se faire via une liaison cryptée et/ou encodée.

## Revendications

1. Procédé (0) d'identification de caractéristiques (11a, 11b, 11c, 11d) visibles dans une image source (F1) et associées à des équipements individuels de sécurité, le procédé comprenant une étape d'acquisition (A) d'une image source (F1) d'une personne (2), l'image source (F1) étant acquise à l'aide d'un capteur d'image (3), le procédé d'identification étant **caractérisé en ce qu'**il comporte :
- une étape de génération (B) par un serveur local (S0) d'une image anonymisée (F2) à partir de l'image source (F1) par suppression de données à caractère personnel (10a, 10b, 10c, 10e) visibles dans l'image source (F1), l'image anonymisée (F2) contenant potentiellement lesdites caractéristiques visibles à identifier ;
- une étape de création (C) d'une requête (100) comprenant l'image anonymisée (F2) et un jeu de questions (Q) relatives à des équipements individuels de sécurité (11a, 11b, 11C, 11d) potentiellement visibles dans l'image anonymisée (F2) ;
- une étape de transmission (D) de la requête (100) vers un serveur distant (S2) qui est éloigné du serveur local (S0) ;
- une étape de réception (E) par le serveur local (S0) d'un message (M) délivré par un serveur distant (S2) en réponse à ladite requête (100), le message (M) contenant des réponses (R) au jeu de questions (Q) ;
- une étape de vérification (F) par le serveur local (S0) que des conditions d'accès définies dans un jeu de conditions d'accès prédéterminé sont vérifiées par les réponses (R) contenues dans le message (M) ; suivie
- d'une étape de génération (H) d'un signal d'autorisation (Cd) si l'étape de vérification (F) confirme que les conditions d'accès définies dans le jeu de conditions d'accès sont bien vérifiées.

2. Procédé selon la revendication 1, dans lequel le signal d'autorisation (Cd) est un signal d'autorisation d'accès (Cd) de ladite personne (2) à un espace physique d'un site sécurisé, le signal d'autorisation d'accès (Cd) étant transmis à un actionneur (5) d'un mécanisme de contrôle d'accès (7).

3. Procédé selon la revendication 2, comportant :
- une étape d'identification (G1) de la personne (2) visible sur l'image source (F1) et/ou d'une clef d'accès (6a) détectée par un lecteur de clef d'accès (6b) ; et
- une étape de vérification de droit d'accès (G2) consistant à vérifier dans un registre préexistant de droits d'accès si la personne (2) visible sur l'image source (F1) et/ou la clef d'accès (6b) identifiées à l'étape d'identification (G1) bénéficient ou non d'un droit d'accès à l'espace physique du site sécurisé ;
- ledit signal d'autorisation d'accès (Cd) étant émis :
- si d'une part les conditions d'accès définies dans le jeu de conditions d'accès sont bien vérifiées ; et
- si d'autre part la personne (2) visible sur l'image source (F1) et/ou la clef d'accès (6b) bénéficient d'un droit d'accès à l'espace physique selon le registre préexistant de droits d'accès.

4. Procédé selon l'une quelconque des revendications 2 ou 3, dans lequel l'actionneur (5) du mécanisme de contrôle d'accès comporte une barrière physique mobile entre une position d'autorisation de passage de la personne vers l'espace physique du site sécurisé et une position d'interdiction d'accès vers ledit espace physique, l'actionneur (5) du mécanisme de contrôle d'accès (7) étant agencé pour qu'à réception dudit signal d'autorisation d'accès (Cd) il autorise le déplacement de la barrière physique mobile de sa position d'interdiction de passage vers sa position d'autorisation de passage.

5. Procédé selon l'une quelconque des revendications 1 à 4, dans lequel le serveur distant (S2) est agencé pour répondre aux questions (Q) contenues dans la requête (100) en mettant en œuvre au moins une inférence d'un modèle d'une intelligence artificielle préalablement entrainée.

6. Procédé selon l'une quelconque des revendications 1 à 5, dans lequel l'étape de génération (B) de l'image anonymisée (F2) à partir de ladite image source (F1) fait appel à l'un au moins des outils compris dans le groupe d'outil comprenant :
- un outil de reconnaissance de visage et/ou d'yeux ;
- un outil de reconnaissance des membres et/ou de doigts d'une personne ;
- un outil de déformation d'une image par élongation de zone de l'image ;
- un outil de floutage partiel ou global d'image ;
- un outil de masquage de zones d'image où sont identifiées une portion de visage, des yeux, une bouche ou des doigts de la personne (2) visible sur l'image source (F1).

7. Procédé selon l'une quelconque des revendications 1 à 6, dans lequel le jeu de questions (Q) relatives aux équipements individuels de sécurité (11a, 11b, 11C, 11d) potentiellement visibles dans l'image anonymisée (F2) est choisi dans une liste prédéfinie de questions comprenant :
- « La personne visible sur l'image porte-t-elle un casque de sécurité sur la tête ? » ;
- « La personne visible sur l'image porte-t-elle un casque antibruit sur les oreilles ? » ;
- « La personne visible sur l'image porte-t-elle un gant sur chaque main ? »
- « La personne visible sur l'image porte-t-elle un pantalon ? » ;
- « La personne visible sur l'image porte-t-elle un heaume ou un écran facial sur la tête ? » ;
- « La personne visible sur l'image porte-t-elle des lunettes de protection devant les yeux ? » ;
- « La personne visible sur l'image porte-t-elle des chaussures de sécurité aux pieds ? » ;
- « La personne visible sur l'image porte-t-elle une veste à col fermé avec des manches longues et serrées aux poignets ? » ;
- « La personne visible sur l'image porte-t-elle une protection respiratoire sur le visage ? » ;
- « La personne visible sur l'image porte-t-elle un harnais ? » ;
- « La personne visible sur l'image porte-t-elle une visière anti arcs électriques ? » ;
- « La personne visible sur l'image porte-t-elle une cagoule de soudage ? » ;
- « La personne visible sur l'image porte-t-elle une ceinture de maintien autour de la taille ? » ;
- « La personne visible sur l'image porte-t-elle des manchettes anti-coupure sur ses avant-bras ? » ;
- « La personne visible sur l'image porte-t-elle un masque à gaz sur le visage ? » ;
- « La personne visible sur l'image porte-t-elle un appareil respiratoire intégré (ARI) ? » ;
- « La personne visible sur l'image porte-t-elle une cagoule à cartouche de gaz de respiration ? » ;
- « La personne visible sur l'image porte-t-elle un détecteur multi-gaz ? » ;
- « La personne visible sur l'image porte-t-elle un détecteur de radio-activité ? ».

8. Procédé selon l'une quelconque des revendications 1 à 7, dans lequel la requête contient en plus du jeu de questions (Q) relatives aux équipements individuels de sécurité (11a, 11b, 11C, 11d), une instruction du type « répondre à chaque question par oui ou par non » ou une instruction du type « répondre à chaque question par 1, si la réponse à la question est oui ou par 0, si la réponse à la question est non ».

9. Procédé selon l'une quelconque des revendications 1 à 8, dans lequel ledit serveur local (S0) est alimenté par une source d'alimentation (9) comportant un panneau photovoltaïque et un accumulateur d'énergie électrique rechargé par ledit panneau photovoltaïque.

10. Système de contrôle d'accès (1) adapté à mettre en œuvre le procédé selon l'une quelconque des revendications 1 à 9, le système de contrôle d'accès (1) comportant :
- ledit serveur local (S0) ;
- ledit capteur d'image (3) fonctionnellement relié audit serveur local (S0) pour générer l'image source (F1) de la personne (2) ;
le serveur local étant adapté à générer l'image anonymisée (F2) à partir de l'image source (F1), le serveur local (S0) étant relié à une mémoire dans laquelle est mémorisé ledit jeu de questions (Q) relatives à des équipements individuels de sécurité (11a, 11b, 11C, 11d) potentiellement visibles dans l'image anonymisée (F2) et étant adapté à créer ladite requête (100) comprenant l'image anonymisée (F2) et à transmettre ladite requête vers le serveur distant (S2), le serveur local (S0) étant en outre adapté à recevoir le message (M) délivré par le serveur distant (S2) en réponse à ladite requête (100), le message (M) contenant lesdites réponses (R) au jeu de questions (Q), le serveur local (S0) étant en outre agencé pour mettre en œuvre l'étape de vérification (F) et l'étape de génération (H) du signal d'autorisation (Cd).
